# FASCICULE DE BREVET EUROPEEN

(11) **EP 2 487 669 B1**
(45) Date de publication et mention de la délivrance du brevet: **18.04.2018**
(21) Numéro de dépôt: 12155056.0
(22) Date de dépôt: 13.02.2012
(51) Int. Cl.: G09B 23/18, G09B 25/02

(54) **Dispositif de simulation d'un alternateur, procédé de commande d'un tel dispositif et système de simulation comprenant un tel dispositif**
Vorrichtung zur Simulation eines Wechselstromgenerators, Steuerverfahren einer solchen Vorrichtung und Simulationssystem, das eine solche Vorrichtung umfasst
Device for simulating an alternator, method for controlling such a device and simulation system including such a device

(30) Priorité: 14.02.2011 FR 1151191
(43) Date de publication de la demande: 15.08.2012
(73) Titulaire: Airbus Operations, 31060 Toulouse (FR)
(72) Inventeur: Irubetagoyena, Patrick, 31000 Toulouse (FR); Resseguier, Eric, 31770 Colomiers (FR); Mercadal, Hervé, 32600 Pujaudran (FR); Bouisset, Nicolas, 31500 Toulouse (FR)
(74) Mandataire: Santarelli

(56) Documents cités:
- DE-A1- 4 204 735
- FR-A1- 2 140 017
- US-A- 4 629 430
- US-A- 5 905 357

## Description

L'invention concerne un dispositif de simulation d'un alternateur, un procédé de commande d'un tel dispositif ainsi qu'un système de simulation comprenant un tel dispositif.

Les systèmes de simulation, utilisés par exemple dans le domaine aéronautique, visent à tester un équipement réel d'une installation dans un environnement distinct de l'environnement normal de fonctionnement de l'équipement, mais dont le comportement vu de l'équipement se rapproche autant que possible de celui de l'environnement normal.

Ainsi, il est nécessaire de prévoir, lorsque l'on souhaite effectuer une simulation, l'alimentation électrique qui permettra la mise sous tension, et donc le fonctionnement, des équipements à tester.

Il est naturellement possible de générer cette alimentation électrique par des systèmes identiques ou semblables à ceux utilisés dans l'installation (par exemple l'aéronef) à simuler. A titre d'exemple, le brevet US5905357 décrit un système optimisé pour piloter un alternateur. Il est toutefois souhaitable, notamment pour réduire les coûts de la simulation et en particulier lorsque l'alimentation de plusieurs équipements à tester doit être réalisée, de prévoir des systèmes d'alimentation qui soient eux aussi distincts des systèmes réels mais en simulent le fonctionnement.

Dans ce contexte, l'invention propose un dispositif de simulation d'un alternateur apte à être connecté à un circuit de commande d'alternateur et à fournir une tension sur un réseau électrique, caractérisé en ce qu'il comprend :
- un circuit inductif RL connecté à une sortie du circuit de commande 20 de sorte à recevoir un courant d'excitation généré par le circuit de commande;
- un capteur de courant situé entre le circuit RL et la connexion dudit circuit RL à la sortie du circuit de commande, configuré pour mesurer le courant d'excitation; et
- un interrupteur apte à appliquer la tension au réseau et commandé sur la base du courant d'excitation mesuré.

Un tel dispositif est ainsi apte à simuler le fonctionnement d'un alternateur en particulier en ce qui concerne son interaction avec le circuit de commande.

On peut prévoir en pratique d'utiliser un module de commande, le capteur de courant délivrant la mesure effectuée du courant d'excitation au module de commande, le module de commande étant apte à commander l'interrupteur en fonction du courant mesuré.

Le module de commande peut alors par exemple être conçu pour commander la fermeture de l'interrupteur lorsque le courant d'excitation dépasse un seuil prédéterminé.

Le dispositif peut comprendre en outre un circuit inductif auquel est appliqué le courant d'excitation, ce qui participe à la simulation du fonctionnement de l'alternateur, en particulier son comportement inductif.

On peut prévoir également des moyens de délivrance d'une tension variable destinée à une entrée du circuit de commande permettant la détermination du courant d'excitation. On peut ainsi simuler les signaux générés en retour vers le circuit de commande.

En termes de procédé, l'invention propose un procédé de commande d'un dispositif de simulation d'un alternateur apte à être connecté à un circuit de commande d'alternateur et à fournir une tension sur un réseau électrique, caractérisé par les étapes suivantes :
- réception par un circuit inductif RL connecté à une sortie du circuit de commande d'un courant d'excitation généré par le circuit de commande;
- mesure du courant d'excitation par un capteur de courant situé entre le circuit RL et la connexion dudit circuit RL à la sortie du circuit de commande, et
- commande d'un interrupteur apte à appliquer la tension au réseau (30) sur la base du courant d'excitation mesuré.

La fermeture de l'interrupteur est par exemple commandée lorsque le courant d'excitation dépasse un seuil prédéterminé.

L'invention propose enfin un système de simulation comprenant un dispositif de simulation comme évoqué ci-dessus et le circuit de commande, dans lequel le circuit de commande comprend un module de détermination du courant d'excitation en fonction d'une valeur représentative d'une tension reçue en entrée du circuit de commande.

Le dispositif de simulation peut en pratique être agencé pour alimenter un premier équipement.

On peut alors prévoir que le dispositif de simulation est connecté au premier équipement à travers une armoire de commutation et qu'un alternateur est connecté à un second équipement à travers l'armoire de commutation.

D'autres caractéristiques et avantages de l'invention apparaitront à la lumière de la description qui suit, faite en référence aux dessins annexés dans lesquels :
- la figure 1 représente les éléments principaux d'un exemple de dispositif de simulation d'un alternateur conforme aux enseignements de l'invention ;
- la figure 2 représente un système de simulation comprenant un dispositif du type de celui illustré à la figure 1 ;
- la figure 3 représente en détail un dispositif de simulation de la figure 2 ;
- la figure 4 représente les étapes d'ouverture du contacteur virtuel de la figure 3 ;
- la figure 5 représente les étapes de fermeture du contacteur virtuel de la figure 3.

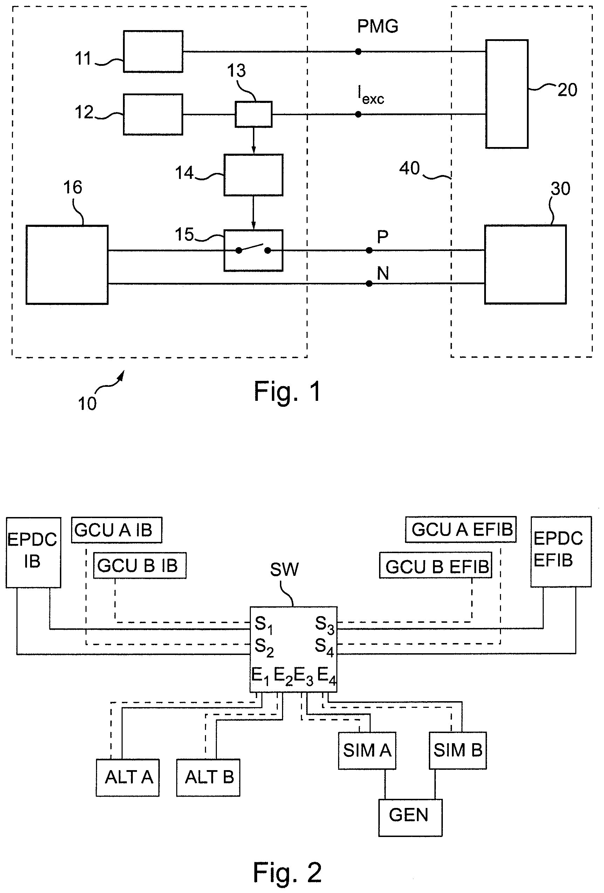

La **figure 1** représente un dispositif de simulation d'un alternateur 10 destiné à fournir une alimentation à un coeur électrique 30 d'un équipement réel à tester 40.

Cet équipement réel 40 comprend également un circuit de commande 20 à piloter le fonctionnement de l'alternateur qui alimente cet équipement réel 40 destiné lors du fonctionnement normal de celui-ci.

Le dispositif de simulation 10 comprend un générateur de tension variable 11 connecté à une entrée PMG du circuit de commande 20 destinée à recevoir en fonctionnement réel la tension générée par un générateur à aimant permanent (fixé sur le rotor de l'alternateur) et qui est donc proportionnelle à la fréquence de rotation de l'alternateur.

Le générateur de tension variable 11 est programmé pour générer une rampe de tension ayant une amplitude croissante (par exemple entre 20 V et 120 V) et une fréquence simultanément croissante (par exemple entre 200 Hz et 1200 Hz), typiquement déclenchée par la réception d'un niveau haut sur une entrée (non représenté) du générateur 11, et une rampe descendante (par exemple entre 120 V et 20 V), typiquement à réception d'un niveau bas sur cette même entrée.

Le dispositif de simulation 10 comprend également un circuit inductif RL 12 connecté à une sortie I_{exc} du circuit de commande 20 destinée à délivrer en fonctionnement réel un courant d'excitation à un enroulement d'excitation situé au stator de l'excitatrice de l'alternateur et ainsi à réguler la tension en sortie de l'alternateur.

Le circuit RL 12 permet ainsi de simuler le comportement inductif de l'alternateur. On utilise par exemple dans le circuit RL 12 une résistance de valeur 10 Ω et une valeur d'inductance de 20 mH.

Le dispositif de simulation 10 comprend en outre un capteur de courant 13 situé entre le circuit RL 12 et la connexion à la sortie I_{exc}, du circuit de commande 20. Le capteur de courant 13 mesure ainsi le courant d'excitation I_{exc} injecté par le circuit de commande 20 dans le circuit RL 12 et délivre la mesure effectuée à un module de commande 14.

Un module d'alimentation 16 (représenté comme intégré au dispositif de simulation 10, mais éventuellement externe à ce dispositif) génère une tension (du même type que celle générée en fonctionnement réel par l'alternateur, par exemple une tension triphasée de 235 VAC et 400 Hz) entre une borne neutre N et au moins une borne de phase P du coeur électrique 30.

Un interrupteur commandé 15 est interposé entre le module d'alimentation 16 et le coeur électrique 30 (par exemple entre l'entrée de phase P du coeur électrique 30 et la sortie correspondante du module d'alimentation 16) de manière à sélectivement alimenter ou non le coeur électrique 30 par la tension générée par le module d'alimentation 16.

L'interrupteur commandé 15 est ouvert ou fermé en fonction d'une commande générée par le module de commande 14, sur la base notamment du courant d'excitation mesuré par le capteur 13 comme expliqué plus en détail dans la suite.

Notamment, l'interrupteur commandé 15 (également dénommé "*contacteur virtuel*") est ici fermé par la commande du module de commande 14 lorsque le courant d'excitation mesuré par le capteur 13 dépasse un seuil prédéterminé (par exemple 2 A RMS) et s'ouvre par exemple à réception par le module de commande 14 d'une information dédiée (non représenté) en provenance du circuit de commande 20.

La **figure 2** représente un système de simulation dans lequel on utilise un dispositif du type de celui qui vient d'être décrit en référence à la figure 1.

Sur cette figure, chaque trait plein représente un ensemble de connexions (principalement des câbles) d'alimentation (qui porte donc des tensions d'alimentation des différents dispositifs à tester) et chaque trait pointillé représente un ensemble de connexions (principalement des câbles) destinées à porter des signaux échangés entre les équipements.

Le système de simulation comprend un premier alternateur ALT A et un second alternateur ALT B qui constituent donc chacun un équipement réel de génération d'une tension à fréquence variable.

Le premier alternateur ALT A est connecté (tant par des connexions de puissance ou d'alimentation, que par des connexions transportant des signaux) à une première entrée E₁ d'une armoire de commutation SW dont le rôle est décrit ci-après.

De même, le second alternateur ALT B est connecté (tant par des connexions l'alimentation que par des connexions relatives au transport de signaux) à une seconde entrée E₂ de l'armoire de commutation SW.

Un générateur GEN (jouant le rôle du module d'alimentation 16 de la figure 1) délivre une ou plusieurs tensions d'une part à une première armoire de simulation SIM A et d'autre part à une seconde armoire de simulation SIM B.

Chacune des première et seconde armoires de simulation SIM A, SIM B est un dispositif de simulation tel que le dispositif de simulation 10 représenté en figure 1. L'architecture de chacune de ces armoires de simulation est par ailleurs décrite plus en détail dans la suite.

La première armoire de simulation SIM A est connectée à une troisième entrée E₃ de l'armoire de commutation SW. De même, la seconde armoire de simulation SIM B est connectée à la quatrième entrée E₄ de l'armoire de commutation SW.

L'armoire de commutation SW comprend un ensemble de commutateurs qui permettent (sur la base d'une commande manuelle) de connecter les câbles arrivant sur l'une des entrées Eᵢ à des câbles correspondant en sortie sur l'une des sorties Sᵢ parmi quatre sorties S₁, S₂, S₃, S₄.

Les câbles d'alimentation des sorties S₁ et S₂ sont reliés au coeur électrique (désigné ici EPDC) d'un premier équipement (désigné ici IB). On remarque que l'on fournit deux alimentations distinctes au coeur électrique selon le principe de la redondance utilisé dans certaines installations, notamment les aéronefs.

Les câbles porteurs de signaux de la sortie S₁ sont quant à eux reliés à un premier circuit de commande GCU B du premier équipement IB tandis que les câbles porteurs de signaux de la seconde sortie S₂ sont reliés à un second circuit de commande GCU A du premier équipement IB. On permet ici également la redondance des équipements.

De la même manière, les câbles d'alimentation des sorties S₃ et S₄ sont reliés au coeur électrique EPDC d'un second équipement EFIB. Les câbles porteurs de signaux de la sortie S₃ sont reliés au premier circuit de commande GCU_{B} du second équipement EFIB et les câbles porteurs de signaux de la sortie S₄ sont reliés à un second circuit de commande GCU_{A} du second équipement EFIB.

On remarque que les quatre circuits de commande GCU A IB, GCU B IB, GCU A EFIB, GCU B EFIB sont des circuits du type du circuit de commande référencé 20 en figure 1.

On comprend que l'armoire de commutation SW permet d'associer l'une des alimentations parmi les deux alimentations réelles ALT A, ALT B et les deux alimentation simulées SIM A, SIM B en tant qu'alimentation nécessaire soit fonctionnement du premier équipement, soit au fonctionnement du second équipement (chaque équipement nécessitant deux alimentations distinctes pour la redondance).

L'utilisation des deux armoires de simulation SIM A, SIM B permet ainsi de tester l'ensemble du système (à savoir le premier et le second équipements) en n'ayant recours qu'à deux alimentations réelles (ici les alternateurs ALT A et ALT B).

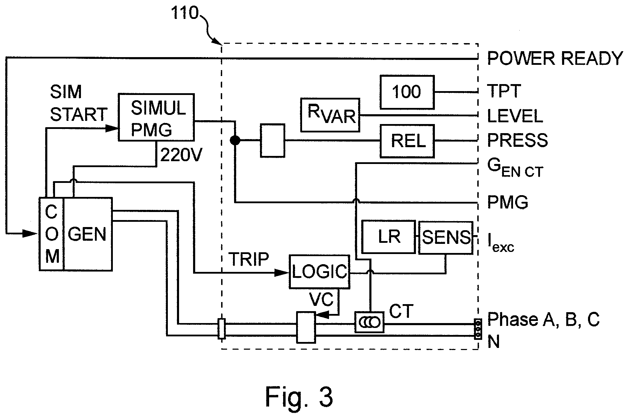

La **figure 3** représente un exemple de dispositif de simulation d'un alternateur conforme aux enseignements de l'invention. Les dispositifs de simulation SIM A, SIM B de la figure 2 sont par exemple réalisés conformément à cette figure 3.

Le dispositif de simulation 110 représenté en figure 3 reçoit tout d'abord un signal d'un générateur de tension variable SIMUL PMG (non intégré dans le dispositif de simulation dans cet exemple et qui correspond au générateur 11 de la figure 1) et transmet directement le signal reçu de ce générateur SIMUL PMG sur une sortie PMG.

Les signaux de tension générés par le générateur SIMUL PMG (en particulier les rampes de tension comme déjà mentionné à propos du générateur 11 en figure 1) sont déclenchés sur la base d'un signal SIM START généré par un module de commande COM.

Le dispositif de simulation 110 comprend un détecteur de fréquence F qui mesure la fréquence du signal PMG simulé par le générateur SIMUL PMG. Un relais REL, connecté à une sortie indicative d'un niveau bas de pression d'huile, est piloté (c'est-à-dire ouvert ou fermé) en fonction de la fréquence mesurée par le détecteur de fréquence F, ce qui permet de simuler un signal PRESS indicatif d'une basse pression d'huile (destiné au circuit de commande GCU) lorsque la fréquence de la tension PMG est inférieure à un seuil et un signal PRESS indicatif d'une pression normale de fonctionnement lorsque la fréquence mesurée est supérieure à ce seuil.

Le dispositif de simulation 110 comprend en outre un module de simulation d'une résistance variable R_{VAR} (réalisé par exemple à base de relais et d'une pluralité de résistances) ce qui permet de générer une différence de potentiel déterminée entre deux mesures de niveau d'huile effectuées par application successive d'un courant constant à deux instants séparés à travers une entrée LEVEL du dispositif de simulation 110 reliée au module de génération d'une résistance variable R_{VAR}.

Le dispositif de simulation 110 comprend également une résistance fixe (ici de valeur 100 Ω) reliée à l'entrée TPT du dispositif de simulation 110 destinée à recevoir un courant du circuit de commande GCU. En fonctionnement normal, la température de fonctionnement du dispositif est indiquée par la résistance (vue du circuit de commande GCU) effectivement reliée à cette entrée TPT.

Le dispositif de simulation 110 de la figure 3 comprend également les éléments déjà décrits en référence à la figure 1.

Notamment, le courant appliqué par le circuit de commande GCU à l'entrée I_{exc} attaque un circuit LR (équivalent à la référence 12 de la figure 1) et est mesuré par un détecteur de courant SENS (équivalent à la référence 13 de la figure 1) sur la base duquel une logique de commande LOGIC ouvre ou ferme un interrupteur commandé (ou "*contacteur virtuel*") CV interposé entre une génératrice de tension d'alimentation GEN (ici en triphasé) et les sorties d'alimentation du dispositif de simulation 110.

On remarque que, comme expliqué dans la suite, le fonctionnement de la logique de commande LOGIC est déclenché par un signal TRIP émis par le module de commande COM déjà mentionné.

Le dispositif de simulation 110 comprend également un transformateur de courant CT apte à mesurer les courants sur les trois phases qui viennent d'être mentionnées et à émettre les informations de mesure correspondantes sur une sortie GEN CT destinée au circuit de commande GCU.

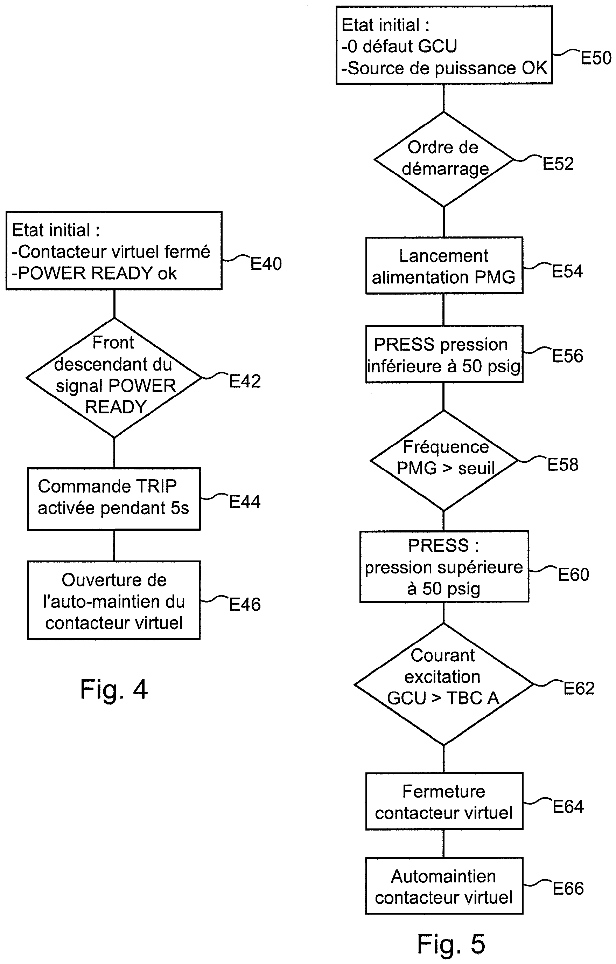

La **figure 4** représente les étapes conduisant à l'ouverture de l'interrupteur commandé ou contacteur virtuel.

Ce procédé débute à l'étape E40 à laquelle le contacteur virtuel est supposé fermé et un signal POWER READY (transmis du circuit de commande GCU au dispositif de simulation 110 est actif. Le dispositif de simulation 110 délivre donc une alimentation au coeur électrique sélectionné.

A détection d'un front descendant sur le signal POWER READY (c'est-à-dire lorsque ce signal devient inactif), le module de commande COM émet une demande d'ouverture du contacteur virtuel CV à destination de la logique de commande LOGIC via le signal TRIP (par exemple pendant une durée de 5 secondes) à l'étape E44.

La logique de commande LOGIC envoie alors à l'interrupteur commandé ou contacteur virtuel CV un signal commandant l'ouverture de celui-ci (étape E46). Lorsqu'il s'agit d'un interrupteur commandé avec auto-maintien, la commande est une commande d'ouverture de l'auto-maintien de l'interrupteur.

La **figure 5** représente les étapes conduisant à la fermeture du contacteur virtuel.

On considère donc une étape E50 au cours de laquelle le dispositif de simulation 110 et le circuit de commande associé ne contiennent aucun signal de défaut (notamment grâce à la génération des signaux simulés par le dispositif de simulation 110 comme déjà indiqué). La source de puissance ou génératrice d'alimentation GEN est également prête à fonctionner.

Le module de commande COM émet alors un ordre de démarrage par le signal SIM START à l'étape E52.

Comme déjà indiqué, ce signal lance la phase de simulation de la tension PMG par le générateur SIMUL PMG à l'étape E54.

Dans les premiers instants après le lancement, la tension simulée par le générateur SIMUL PMG a une fréquence inférieure au seuil déjà mentionné de sorte que le dispositif de simulation 110 génère un signal PRESS représentatif d'une pression inférieure au seuil de pression basse.

La fréquence de la tension PMG simulée continue alors d'augmenter (du fait de la rampe indiquée plus haut) et atteint un seuil à l'étape E58 à partir duquel le relais REL du dispositif de simulation 110 se ferme et génère ainsi en sortie un signal de pression PRESS représentatif d'une pression d'huile normale (étape E60).

Par ailleurs, le circuit de commande GCU surveille également la fréquence de la tension PMG simulée par le générateur SIMUL PMG et génère à un moment donné (tel que défini pour le fonctionnement normal) un courant d'excitation I_{exc} appliqué à l'entrée correspondante du dispositif de simulation 110 (étape E62).

Le courant d'excitation I_{exc} est détecté par le capteur de courant SENS ce qui entraîne, à travers la logique de commande LOGIC, la fermeture du contacteur virtuel à l'étape E64, typiquement lorsque le courant d'excitation I_{exc} mesuré dépasse la valeur de seuil déjà mentionnée.

La fermeture du contacteur virtuel permet de délivrer la puissance du générateur d'alimentation GEN au coeur électrique auquel le dispositif de simulation 110 est connecté.

Enfin, dans le cas d'un contacteur virtuel à auto-maintien (comme déjà mentionné), l'auto-maintien est alors enclenché afin de maintenir le contacteur virtuel fermé quel que soit le courant d'excitation (étape E66).

On note que le circuit de commande GCU génère alors un signal POWER READY (mentionné en référence à la figure 4) actif dès lors que le coeur électrique de l'équipement concerné reçoit la tension du dispositif de simulation 110.

Les modes de réalisation qui précèdent ne sont que des exemples envisageables de mise en oeuvre de l'invention, qui ne s'y limite pas.

## Revendications

1. Dispositif de simulation d'un alternateur apte à être connecté à un circuit de commande (20) d'alternateur et à fournir une tension sur un réseau électrique (30), **caractérisé en ce qu'**il comprend :
- un circuit inductif RL (12) connecté à une sortie du circuit de commande (20) de sorte à recevoir un courant d'excitation (I_{exc}) généré par le circuit de commande (20) ;
- un capteur de courant (13) situé entre le circuit RL (12) et la connexion dudit circuit RL (12) à la sortie du circuit de commande (20), configuré pour mesurer le courant d'excitation (I_{exc}); et
- un interrupteur (15) apte à appliquer la tension au réseau (30) et commandé sur la base du courant d'excitation (I_{exc}) mesuré.

2. Dispositif de simulation selon la revendication 1, comprenant un module de commande (14), le capteur de courant 13 délivrant la mesure effectuée du courant d'excitation au module de commande, le module de commande étant apte à commander l'interrupteur (15) en fonction du courant mesuré.

3. Dispositif de simulation selon la revendication 2, dans lequel le module de commande est conçu pour commander la fermeture de l'interrupteur lorsque le courant d'excitation dépasse un seuil prédéterminé.

4. Dispositif selon l'une des revendications 1 à 3, comprenant des moyens (11) de délivrance d'une tension variable destinée à une entrée du circuit de commande (20) permettant la détermination du courant d'excitation.

5. Procédé de commande d'un dispositif de simulation d'un alternateur apte à être connecté à un circuit de commande (20) d'alternateur et à fournir une tension sur un réseau électrique (30), **caractérisé par** les étapes suivantes :
- réception par un circuit inductif RL (12) connecté à une sortie du circuit de commande (20) d'un courant d'excitation (I_{exc}) généré par le circuit de commande (20) ;
- mesure du courant d'excitation (I_{exc}) par un capteur de courant (13) situé entre le circuit RL (12) et la connexion dudit circuit RL (12) à la sortie du circuit de commande (20), et
- commande d'un interrupteur (15) apte à appliquer la tension au réseau (30) sur la base du courant d'excitation (I_{exc}) mesuré.

6. Procédé de commande selon la revendication 5, dans lequel la fermeture de l'interrupteur est commandée lorsque le courant d'excitation dépasse un seuil prédéterminé.

7. Système de simulation comprenant un dispositif de simulation selon l'une des revendications 1 à 4 et le circuit de commande, dans lequel le circuit de commande comprend un module de détermination du courant d'excitation en fonction d'une valeur représentative d'une tension reçue en entrée du circuit de commande.

8. Système selon la revendication 7, dans lequel le dispositif de simulation est agencé pour alimenter un premier équipement (IB).

9. Système selon la revendication 8, dans lequel le dispositif de simulation est connecté au premier équipement (IB) à travers une armoire de commutation (SW) et dans lequel un alternateur (ALT A ; ALT B) est connecté à un second équipement (EFIB) à travers l'armoire de commutation (SW).

## Patentansprüche

1. Vorrichtung zur Simulation eines Wechselstromgenerators, die geeignet ist, an einen Steuerkreis (20) eines Wechselstromgenerators angeschlossen zu werden und eine Spannung an ein Stromnetz (30) zu liefern, **dadurch gekennzeichnet, dass** sie aufweist:
- eine induktive RL-Schaltung (12), die an einen Ausgang des Steuerkreises (20) derart angeschlossen ist, um einen Erregerstrom (I_{exc}) zu empfangen, der von dem Steuerkreis (20) erzeugt wird;
- einen Stromsensor (13), der zwischen der RL-Schaltung (12) und dem Anschluss der RL-Schaltung (12) an dem Ausgang des Steuerkreises (20) angeordnet ist, der konfiguriert ist, um den Erregerstrom (I_{exc}) zu messen, und
- einen Schalter (15), der geeignet ist, die Spannung an das Netz (30) anzulegen und der auf der Grundlage des gemessenen Erregerstroms (I_{exc}) gesteuert wird.

2. Vorrichtung zur Simulation nach Anspruch 1, umfassend ein Steuermodul (14), wobei der Stromsensor (13) die durchgeführte Messung des Erregerstroms an das Steuermodul ausgibt, wobei das Steuermodul geeignet ist, den Schalter (15) in Abhängigkeit von dem gemessenen Strom zu steuern.

3. Vorrichtung zur Simulation nach Anspruch 2, wobei das Steuermodul ausgebildet ist, um das Schließen des Schalters zu steuern, wenn der Erregerstrom einen vorbestimmten Schwellenwert überschreitet.

4. Vorrichtung nach einem der Ansprüche 1 bis 3, umfassend Mittel (11) zum Ausgeben einer variablen Spannung, die für einen Eingang des Steuerkreises (20) bestimmt ist, der das Bestimmen des Erregerstroms ermöglicht.

5. Verfahren zur Steuerung einer Vorrichtung zur Simulation eines Wechselstromgenerators, die geeignet ist, an einen Steuerkreis (20) eines Wechselstromgenerators angeschlossen zu werden und eine Spannung an ein Stromnetz (30) zu liefern, **gekennzeichnet durch** die folgenden Schritte:
- Empfangen durch eine induktive RL-Schaltung (12), die an einen Ausgang des Steuerkreises (20) angeschlossen ist, eines Erregerstroms (I_{exc}), der von dem Steuerkreis (20) erzeugt wird;
- Messen eines Erregerstroms (I_{exc}) durch einen Stromsensor (13), der zwischen der RL-Schaltung (12) und dem Anschluss der RL-Schaltung (12) an dem Ausgang des Steuerkreises (20) angeschlossen ist, und
- Steuern eines Schalters (15), der geeignet ist, die Spannung an das Netz (30) auf der Grundlage des gemessenen Erregerstroms (I_{exc}) anzulegen.

6. Verfahren zur Steuerung nach Anspruch 5, wobei das Schließen des Schalters gesteuert wird, wenn der Erregerstrom einen vorbestimmten Schwellenwert überschreitet.

7. Simulationssystem, umfassend eine Vorrichtung zur Simulation nach einem der Ansprüche 1 bis 4 und den Steuerkreis, wobei der Steuerkreis ein Modul zum Bestimmen des Erregerstroms in Abhängigkeit von einem Wert aufweist, der für eine Spannung repräsentativ ist, die am Eingang des Steuerkreises empfangen wird.

8. System nach Anspruch 7, wobei die Vorrichtung zur Simulation angeordnet ist, um ein erstes Gerät (IB) zu speisen.

9. System nach Anspruch 8, wobei die Vorrichtung zur Simulation durch einen Schaltschrank (SW) an ein erstes Gerät (IB) angeschlossen ist und wobei ein Wechselstromgenerator (ALT A; ALT B) durch den Schaltschrank (SW) an ein zweites Gerät (EFIB) angeschlossen ist.

## Claims

1. Device for simulating an alternator, able to be connected to an alternator control circuit (20) and to supply a voltage on an electrical network (30), **characterized in that** it comprises:
- an inductive RL circuit (12) connected to an output of the control circuit (20) so as to receive an excitation current (I_{exc}) generated by the control circuit (20);
- a current sensor (13) situated between the RL circuit (12) and the connection of said RL circuit (12) to the output of the control circuit (20) and configured to measure the excitation current (I_{exc}) ; and
- a switch (15) able to apply the voltage to the network (30) and commanded on the basis of the measured excitation current (I_{exc}).

2. Simulation device according to Claim 1, comprising a control module (14), the current sensor (13) delivering the performed measurement of the excitation current to the control module, the control module being able to command the switch (15) depending on the measured current.

3. Simulation device according to Claim 2, wherein the control module is designed to command the closure of the switch when the excitation current exceeds a predetermined threshold.

4. Device according to one of Claims 1 to 3, comprising means (11) for delivering a variable voltage intended for an input of the control circuit (20) enabling the excitation current to be determined.

5. Method for controlling a device for simulating an alternator, able to be connected to an alternator control circuit (20) and to supply a voltage on an electrical network (30), **characterized by** the following steps:
- reception, by an inductive RL circuit (12) connected to an output of the control circuit (20), of an excitation current (I_{exc}) generated by the control circuit (20);
- measurement of the excitation current (I_{exc}) by a current sensor (13) situated between the RL circuit (12) and the connection of said RL circuit (12) to the output of the control circuit (20); and
- commanding of a switch (15) able to apply the voltage to the network (30) on the basis of the measured excitation current (I_{exc}).

6. Control method according to Claim 5, wherein the closure of the switch is commanded when the excitation current exceeds a predetermined threshold.

7. Simulation system comprising a simulation device according to one of Claims 1 to 4 and the control circuit, wherein the control circuit comprises a module for determining the excitation current depending on a value representative of a voltage received at the input of the control circuit.

8. System according to Claim 7, wherein the simulation device is set up to supply power to a first device (IB).

9. System according to Claim 8, wherein the simulation device is connected to the first device (IB) through a switch cabinet (SW) and wherein an alternator (ALT A; ALT B) is connected to a second device (EFIB) through the switch cabinet (SW).
